# NEUE EUROPÄISCHE PATENTSCHRIFT

(11) **EP 2 544 349 B2**
(45) Veröffentlichungstag und Bekanntmachung des Hinweises auf die Entscheidung über den Einspruch: **12.02.2025**
(45) Hinweis auf die Patenterteilung: 19.09.2018
(21) Anmeldenummer: 11173173.3
(22) Anmeldetag: 08.07.2011
(51) Int. Cl.: H02M 5/458

(54) **Steuerung eines Stromrichters einer Fördertechnikanlage**
Management of a frequency converter on a conveyor assembly
Pilotage d'un convertisseur de courant pour installation de manutention

(43) Veröffentlichungstag der Anmeldung: 09.01.2013
(73) Patentinhaber: Siemens Aktiengesellschaft, 80333 München (DE)
(72) Erfinder: Rebbereh, Carsten, 90768 Fürth (DE); Riehle, Dominik, 90419 Nürnberg (DE)
(74) Vertreter: Siemens Patent Attorneys

(56) Entgegenhaltungen:
- EP-A2- 0 413 966
- EP-A2- 0 413 966
- EP-A2- 1 496 608
- DE-A1- 102008 052 921
- DE-A1- 102009 056 720
- US-A- 3 512 067
- US-B1- 6 229 278

## Beschreibung

Die Erfindung betrifft ein Verfahren zur Steuerung eines Stromrichters mit einem steuerbaren Wechselrichter, der lastseitig mit einem elektromotorischen Antrieb einer Fördertechnikanlage, insbesondere einer Elektrohängebahn der Automobilindustrie, verbunden ist. Sie betrifft weiter eine Fördertechnikanlage, umfassend einen danach betriebenen Stromrichter, insbesondere einen Frequenzumrichter.

Bei Anlagen der Fördertechnik, insbesondere sogenannten Elektrohängebahnen zum Heben und Transportieren von Fahrzeugen oder Fahrzeugteilen in der Automobilindustrie, werden üblicherweise elektromotorische Antriebe eingesetzt. Der Elektromotor eines solchen Antriebs wird von einem Frequenzumrichter gesteuert, der aus dem Wechselstrom eines mehrphasigen Versorgungsnetzes eine hinsichtlich der Amplitude sowie der Frequenz veränderbare Spannung generiert und mit dieser umgerichteten Spannung den in der Regel als Drehstrommotor konzipierten Elektromotor betreibt. Der Frequenzumrichter ermöglicht bei gleichbleibendem Drehmoment des Elektromotors dessen stufenlose Drehzahleinstellung bis zu einer Nenndrehzahl.

Der Frequenzumrichter umfasst einen lastseitigen Wechselrichter und gegebenenfalls über einen Gleichstrom- oder Gleichspannungs-Zwischenkreis einen netzseitigen Gleichrichter, der beispielsweise über einen Transformator an das Versorgungsnetz angeschlossen ist. Der steuerbare Wechselrichter als Betriebsmittel für den Drehstrommotor umfasst eine Anzahl von steuerbaren Halbleiterschaltern, deren nachfolgend als Pulsfrequenz bezeichnete Schaltfrequenz auf eine Sollfrequenz voreingestellt ist. Diese beruht ihrerseits auf einer unteren Basisfrequenz, die in Frequenzschritten von beispielsweise 2kHz innerhalb eines Frequenzbereiches von beispielsweise 4kHz bis 16kHz verändert werden kann.

Wenn in einer Applikation Geräuschentwicklungen im hörbaren Bereich vermieden werden sollen, wird eine möglichst hohe Pulsfrequenz als Sollfrequenz eingestellt, was jedoch aufgrund der Schaltfrequenzabhängigkeit der Wärmeentwicklung der Halbleiterschalter eine als Derating bezeichnete Leistungsherabsetzung der Halbleiterschalter bedingt. Die Leistungsherabsetzung erfolgt durch eine regelungstechnische Begrenzung des dauerhaft vom Frequenzumrichter lieferbaren Ausgangsstroms auf beispielsweise 50% des bei der untersten Pulsfrequenz von beispielsweise 2kHz oder 4kHz dauerhaft lieferbaren Ausgangsstroms.

Der Betrieb der Fördertechnikanlage erfordert jedoch in bestimmten Betriebssituationen eine zumindest kurzzeitige Überlast, um beispielsweise eine gewünschte Beschleunigungsrampe des Elektromotors möglichst kurzzeitig durchfahren zu können. Eine solche Überlastfähigkeit ist zwar mit herkömmlichen Stromrichtersteuerungen kurzzeitig zulässig. Jedoch ist häufig entweder die verfügbare Überlastzeit und/oder der dabei erreichbare zulässige Ausgangsstrom nicht ausreichend.

Zur Vermeidung dieser Nachteile ist es daher bislang notwendig, einen Frequenzumrichter der nächst größeren Leistungsstufe (mit einer höheren unteren Puls- oder Basisfrequenz) bereitzustellen, was jedoch aufgrund der damit verbundenen Erhöhung der Baugröße und der Kosten des Frequenzumrichters unerwünscht ist.

Aus der US 6,229,278 B1 sind ein Verfahren und eine Vorrichtung zur Regelung einer Versorgungsgleichspannung und eines Motorstromes innerhalb von Grenzwerten bekannt, wobei eine Spannungsabweichung benutzt wird, um eine Wechselrichterausgangsfrequenz zu erhöhen, bis eine Spannungsgrenzwertbedingung erneut erfüllt wird. Ein Stromfehlersignal wird benutzt, um die Wechselrichterausgangsfrequenz zu reduzieren, bis die Stromgrenzwertbedingung erneut erfüllt wird. Trifft weder eine Spannungsgrenzwertbedingung noch eine Stromgrenzwertbedingung zu, so wird zur Steuerung der Ausgangsfrequenz eine Anstiegsgeschwindigkeit als eine Funktion des Spannungsgrenzwertes abgesenkt oder als eine Funktion des Stromgrenzwertes erhöht.

Aus der US 3,512,067 ist eine reversible Geschwindigkeitsregelungsvorrichtung für einen dreiphasen Käfigankermotor unter Verwendung einer unabhängigen Regelung des Motorflusses bekannt. Dabei werden die Phasen der Statorwicklungen mittels eines pulsbetriebenen Wechselrichter selektiv angeregt. Die Ausgangsspannung des Wechselrichters ist durch ein erstes Signal geregelt, welches proportional zur Differenz eines voreingestellten Motorflusses und des aktuellen Motorflusses ist. Die Ausgangsfrequenz des Wechselrichters ist gesondert geregelt durch ein zweites Signal, welches dadurch erhalten wird, dass ein Referenzstrom, welcher proportional zu einer Differenz einer voreingestellten Motorgeschwindigkeit und der aktuellen Motorgeschwindigkeit ist, mit dem Realteil eines aktuellen Motorstroms verglichen wird.

Die EP 0 413 966 A2 offenbart einen pulsweitenmodulierterten Wechselrichter, welcher mit variablen Frequenzen und Amplituden betrieben werden kann, und der eine Trägerfrequenz auf der Basis von Veränderung der Temperatur, des Ausgangsstroms und der Ausgangsfrequenzen modifizieren kann. Der Wechselrichter operiert mit hohen Trägerfrequenzen, wodurch die Geräuschentwicklung im hörbaren Bereich reduziert werden soll.

Der Erfindung liegt die Aufgabe zugrunde, unter Vermeidung der genannten Nachteile ein besonders geeignetes Verfahren zur Steuerung eines Stromrichters als Betriebsmittel eines elektromotorischen Antriebs einer Fördertechnikanlage, insbesondere einer Elektrohängebahn der Automobilindustrie, anzugeben. Des Weiteren soll eine Fördertechnikanlage umfassend einen entsprechend steuerbaren Stromrichter, insbesondere Frequenzumrichter, angegeben werden.

Bezüglich eines Verfahrens wird die genannte Aufgabe gelöst durch die Merkmale des Anspruchs 1. Vorteilhafte Weiterbildungen sind Gegenstand der hierauf rückbezogenen Unteransprüche.

Hierzu wird die Pulsfrequenz des Wechselrichters bzw. die Schaltfrequenz dessen Halbleiterschalter in Abhängigkeit vom lastseitig geforderten Ausgangsstrom des Stromrichters verändert, indem die Pulsfrequenz reduziert wird, wenn ein leistungs- oder drehzahlabhängiger Sollwert des Ausgangsstroms einen pulsfrequenzabhängigen Stromgrenzwert überschreitet. Sobald der angeforderte Sollwert des Ausgangsstroms den Stromgrenzwert erneut unterscheitet, wird die Pulsfrequenz auf eine eingestellte Sollfrequenz erhöht.

Die Reduzierung der Pulsfrequenz erfolgt ausgehend von einer auf eine Basis- oder Nennfrequenz bezogenen Sollfrequenz. Die Reduzierung der Pulsfrequenz erfolgt in Frequenzschritten oder -stufen von beispielsweise 2kHz, und ermöglicht der Regelung, einen höheren Ausgangsstrom des Stromrichters bis hin zum der Basisfrequenz zugeordneten maximalen Ausgangsstrom bereitzustellen. Da erhöhte Leistungsanforderungen üblicherweise nur bei bestimmten Betriebszuständen erforderlich sind, kann eine entsprechend seltene, kurzzeitig erhöhte Geräuschentwicklung in Kauf genommen werden. Sobald die erhöhte Leistungsanforderung nicht mehr besteht, wird die Pulsfrequenz vorzugsweise bis maximal auf die Sollfrequenz erneut erhöht.

In vorteilhafter Weiterbildung wird der leistungs- bzw. drehzahlabhängig angeforderte Stromsollwert des Ausgangsstroms mit dem Stromgrenzwert verglichen, dem jeweils einer der möglichen Pulsfrequenzen zugeordnet ist. Ist der betriebsbedingt geforderte Stromsollwert größer als dieser Stromgrenzwert, so wird die Pulsfrequenz reduziert mit der Folge, dass ein vergleichsweise großer Ausgangsstrom verfügbar ist. Unterschreitet der Stromsollwert den Stromgrenzwert erneut, so wird die Pulsfrequenz wieder erhöht.

"Betriebsbedingt gefordert" kann bedeuten, dass der Anlagenantrieb (Elektromotor) einen höheren Ausgangs- oder Motorstrom benötigt, um ein höheres Drehmoment - also eine höhere Leistung - zu erbringen. Zusätzlich oder alternativ geht eine betriebsbedingte Forderung von einer übergeordneten Anlagen - oder Prozesssteuerung aufgrund eines erforderlichen oder gewünschten, vom momentanen Betriebszustand oder Anlagenverhalten abweichenden Betriebszustandes aus, indem beispielsweise ein entsprechend höherer Drehzahlsollwert vorgegeben wird. Betriebsbedingt steht somit auch synonym für "last-, prozess- oder anlagenseitig".

Als Regelverfahren dient ein Stromregler, dem ein Drehzahlregler überlagert ist. Der Ausgangsstrom des Stromrichters wird als Istwert erfasst und mit dem Sollwert verglichen, der seinerseits aus einer Abweichung des aktuell geforderten Drehzahlsollwertes vom Drehzahlistwert des Antriebs bzw. Elektromotors ermittelt wird. Der Drehzahlsollwert wird von einer übergeordneten Anlagen- oder Prozesssteuerung bereitgestellt bzw. betriebsbedingt vorgegeben, wenn beispielsweise eine Beschleunigungsrampe durchfahren werden muss, um einen Transportvorgang beispielsweise eines Karosserieteils eines Fahrzeugs einzuleiten.

Zusätzlich zum aktuell benötigten Ausgangsstrom wird die Pulsfrequenz in Abhängigkeit von der aktuellen Temperatur des Wechselrichters, dass heißt insbesondere dessen gesteuert betriebenen Halbleiterschalter verändert. Die Temperatur wird dabei vorzugsweise aus dem aktuellen Ausgangsstrom ermittelt. Denkbar und möglich ist auch eine direkte Temperaturmessung des Leistungsteils des Strom- oder Frequenzumrichters.

Um insbesondere bei einer erneuten Heraufsetzung der Pulsfrequenz ein unerwünschtes Umschalten zwischen zwei benachbarten Frequenzstufen zu vermeiden, arbeitet die Umschaltung der Pulsfrequenz nach Art einer Zweipunktregelung (Hysterese). Diese gewährleistet eine Umschaltung der Pulsfrequenz auf die nächst niedrigere bzw. nächst höhere Frequenzstufe erst dann, wenn die momentane Pulsfrequenz diese Frequenzstufe über- bzw. unterschritten hat.

Bezüglich der Fördertechnikanlage wird die genannte Aufgabe gelöst durch die Merkmale des Anspruchs 7. Vorteilhafte Ausgestaltungen sind Gegenstand der hierauf rückbezogenen Unteransprüche.

Der Strom- bzw. Frequenzumrichter weist einen von einer Regeleinrichtung gesteuerten Wechselrichter auf, der eingangsseitig, vorzugsweise über einen Zwischenkreis, von einem Wechselstromnetz gespeist und ausgangsseitig mit einem elektromotorischen Antrieb einer Fördertechnikanlage, insbesondere mit einem Drehstrommotor einer Elektrohängebahn der Automobilindustrie, verbunden ist. Die Regeleinrichtung reduziert die Pulsfrequenz des Wechselrichters in Abhängigkeit von der antriebsseitig geforderten Leistung (Strom, Spannung, Drehzahl), sobald ein betriebsbedingt geforderter Sollwert des Ausgangsstroms einen pulsfrequenzabhängigen Stromgrenzwert überschreitet. Unterschreitet der Sollwert des Ausgangsstroms diesen Stromgrenzwert erneut, so erhöht die Regeleinrichtung die Pulsfrequenz bis maximal auf die voreingestellte Sollfrequenz.

Hierzu umfasst die Regeleinrichtung in vorteilhafter Ausgestaltung eine Stromregelung und eine dieser überlagerten Drehzahlregelung. Die Drehzahlregelung generiert aus einer Abweichung der aktuellen Antriebsdrehzahl des Elektromotors von einem beispielsweise von einer übergeordneten Steuerung betriebsbedingt vorgegebenen, geänderten Drehzahlsollwert einen neuen Sollwert des Ausgangsstroms und vergleicht diesen mit dem pulsfrequenzabhängigen Stromgrenzwert. Liegt der aus der Drehzahldifferenz generierte Sollwert des Ausgangsstroms über dem der aktuellen Pulsfrequenz zugeordneten Stromgrenzwert, so schaltet die Regeleinrichtung die Pulsfrequenz stufenweise auf einen niedrigeren Frequenzwert. Ist die betriebsbedingt geforderte Leistungserhöhung beendet, so reduziert die Regeleinrichtung die Drehzahl mit der Folge, dass der untergeordnete Stromregler den Sollwert des Ausgangsstroms herabsetzt. Infolgedessen schaltet die Regeleinrichtung die Pulsfrequenz auf einen höheren Frequenzwert, im Grenzfall auf die Sollfrequenz, zurück.

Die Stromregelung arbeitet in Abhängigkeit von der aktuellen Temperatur der gesteuert betriebenen Halbleiterschalter des Wechselrichters und berücksichtigt somit das sogenannte Derating.

Die mit der Erfindung erzielten Vorteile bestehen insbesondere darin, dass aus einer Ableitung der erlaubten Pulsfrequenz eines Stromrichters aus dem aktuellen Strombedarf eines vom Stromrichter betriebenen elektromotorischen Antriebs das Leistungsteil des Stromrichters, das heißt insbesondere die Halbleiterschalter des Wechselrichters stets optimal genutzt wird. Dabei wird vorzugsweise auch die aktuelle Wärmeentwicklung des Leistungsteils berücksichtigt, indem die Veränderung der Pulsfrequenz zusätzlich temperaturabhängig erfolgt.

Insbesondere bei Verfahrprofilen von Fördertechnikanlagen mit relativ hoher Überlast und hierzu vergleichsweise geringen Leistungen im normalen Betriebszustand (Beharrungszustand) ist es möglich, ein vergleichsweise leistungsschwaches Leistungsteil einzusetzen, was insgesamt zu entsprechend geringeren Anlagekosten führt. Ein hierdurch bedingtes kurzzeitiges Auftreten von Geräuschen (pfeifen) beim Anfahren oder Bremsen des Antriebs ist gegenüber den erzielten Vorteilen für den Anlagenbetrieb akzeptabel.

Nachfolgend wird ein Ausführungsbeispiel der Erfindung anhand einer Zeichnung näher erläutert. Darin zeigen:
- FIG 1: schematisch einen Frequenzumrichter, dessen lastseitiger Wechselrichter an eine Antriebseinheit einer Fördertechnikanlage geführt ist,
- FIG 2: in Diagrammdarstellungen die zeitlichen Verläufe eines betriebsbedingt geforderten Sollwertes des umrichterseitig erzeugten Ausgangsstroms (oben) und einer daraus resultierenden Pulsfrequenz (Mitte) bzw. Temperatur des Wechselrichters oder Umrichterleistungsteils (unten).

Einander entsprechende Teile und Größen sind in allen Figuren mit den gleichen Bezugszeichen versehen.

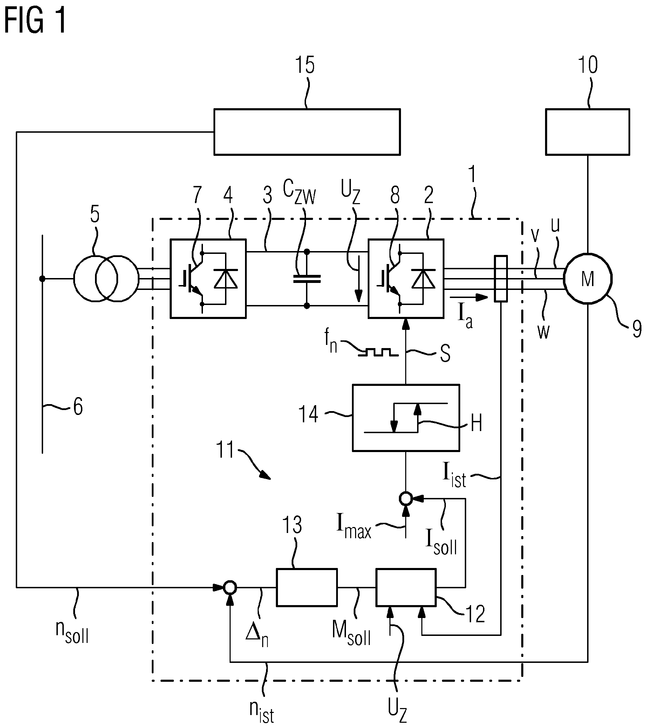

Der in FIG 1 dargestellte (elektronische) Frequenzumrichter 1 umfasst einen Wechselrichter 2, der im Ausführungsbeispiel eingangsseitig an einen Gleichstrom- oder Gleichspannungs-Zwischenkreis 3 angeschlossen ist, den ein Gleichrichter 4 speist. Dieser kann über einen Transformator 5 an ein mehrphasiges Versorgungsnetz 6 geführt sein. Der Gleichrichter 4 kann sowohl ungesteuert als auch über symbolisch angedeutete Halbleiterschalter 7, die üblicherweise in einer sogenannten H-Brücke verschaltet sind, gesteuert sein. Der Zwischenkreis 3 besteht aus einem Kondensator C_{ZW} zur Glättung der Gleichspannung U_{Z} sowie ggf. einer (nicht dargestellten) Induktivität zur Entstörung.

Der Frequenzumrichter 1 ist beispielsweise rückspeisefähig, indem aufgenommene generatorische Leistung (Bremsleistung) in das Versorgungsnetz 6 zurück gespeist werden kann. Der Frequenzumrichter 1 leistet beispielsweise 1,5kW Drehstrom bei 400V.

Der Wechselrichter 2 arbeitet mit nachfolgend als Halbleiterschalter 8 bezeichneten leistungselektronischen Schaltern, die in nicht näher dargestellter Art und Weise ebenfalls in einer sogenannten H-Brücke verschaltet sind. Als Halbleiterschalter 8 können MOSFET's (Metall-Oxid-Halbleiter-Feldeffekttransistoren), IGBT's (Insulated Gate Bipolar Transistor) oder auch Schaltthyristoren, sogenannte IGCT's (Integrated Gate Communtated Thyristor) eingesetzt sein. Der Wechselrichter 2 bzw. die in Brückenschaltung verschalteten Halbleiterschalter 8 erzeugen beispielsweise durch Pulsweitenmodulation (PWM) eine veränderliche Ausgangsspannung bzw. einen veränderlichen Ausgangsstrom Iₐ, dessen Höhe und Frequenz in weiten Grenzen geregelt werden kann.

Ausgangsseitig ist der Wechselrichter 2 und damit der Frequenzumrichter 1 an einen Drehstrommotor 9 geführt, dessen Spulenwicklungen in nicht näher dargestellter Art und Weise über drei mit den Phasen u,v,w bezeichnete Leitungen mit Mittenabgriffen dreier Brückenzweige mit jeweils zwei Halbleiterschaltern 8 der Brückenschaltung verbunden und beispielsweise in Dreieckschaltung verschaltet sind. Der Drehstrommotor 9 dient als Antrieb für eine lediglich als Funktionsbaustein angedeutete Elektrohängebahn 10, wie diese in der Automobilindustrie zum Transportieren von Fahrzeug- oder Karosserieteilen eingesetzt wird.

Eine Regeleinrichtung 11 des Frequenzumrichters 1 umfasst einen Stromregler 12 und eine diesem überlagerten Drehzahlregler 13 sowie eine Schalteinrichtung 14 zur Umschaltung der Pulsfrequenz fₙ eines Steuer-oder Schaltsignals S zum Ansteuern bzw. Schalten der Halbleiterschalter 8 des Wechselrichters 2.

Die Regeleinrichtung 11 vergleicht einen Drehzahlsollwert nₛₒₗₗ, der von einer übergeordneten Prozess- oder Anlagensteuerung 15 generiert wird, mit einem am Drehstrommotor 9 erfassten Drehzahlistwert nᵢₛₜ. Aus einer Abweichung Δn des Drehzahlistwertes nᵢₛₜ vom Drehzahlsollwert nₛₒₗₗ generiert der Drehzahlregler 13 einen Momentensollwert Mₛₒₗₗ, aus dem der Stromregler 12 anhand eines an sich bekannten mathematischen Models des Elektromotors 9 mit der bekannten und im Wesentlichen konstanten Zwischenkreisspannung U_{Z} sowie dem Istwert Iᵢₛₜ des aktuellen Ausgangsstroms Iₐ des Frequenzumrichters 1 bzw. Wechselrichters 2 einen von der geforderten Drehzahl nₛₒₗₗ abhängigen Sollwert Iₛₒₗₗ für den angeforderten Ausgangsstrom Iₐ generiert. Dieser Sollwert Iₛₒₗₗ wird mit einem Stromgrenzwert Iₘₐₓ(fₙ) verglichen, der wiederum einer bestimmten Puls- bzw. Schaltfrequenz fₙ für den Wechselrichter 2 zugeordnet ist.

Die Umschaltung zwischen diskreten Frequenzwerten f_{1..m} ist innerhalb bestimmter Grenzen mit einer unteren Basisfrequenz f_{B} und einer oberen Sollfrequenz f_{S} möglich. Die Basisfrequenz f_{B} ist umrichterspezifisch und liegt im Ausführungsbeispiel beispielsweise bei 4kHz, kann jedoch beispielsweise auch 2kHz betragen. Die obere Sollfrequenz f_{S} beträgt im Ausführungsbeispiel 16kHz, kann jedoch beispielsweise auch 12kHz betragen. Die diskreten Frequenzschritte oder -stufen Δf betragen beispielsweise 2kHz.

Die Basisfrequenz f_{B} legt praktisch den maximalen Ausgangsstrom Iₐ des Frequenzumrichters 1 fest. Aufgrund der mit zunehmender Puls- bzw. Schaltfrequenz fₙ ansteigenden Schaltverluste und der damit wiederum verbundenen Wärmeentwicklung des im Wesentlichen von den Halbleiterschaltern 8 gebildeten Leistungsteils des Wechselrichters 2 bedingt eine pulsfrequenzabhängige Reduzierung des dauerhaft möglichen Nenn- oder Betriebsstroms als Ausgangsstrom Iₐ des Frequenzumrichters 1.

Der Nennstrom des Umrichters 1 ist bei der vergleichsweise hohen Pulsfrequenz f_{S} auf beispielsweise lediglich 50% des bei der vergleichsweise niedrigen Pulsfrequenz f_{B} dauerhaft lieferbaren Ausgangsstrom Iₐ reduziert. Die entsprechende Abhängigkeit des Ausgangsstroms Iₐ von der Pulsfrequenz fₙ spiegelt sich in der sogenannten Derating-Kennlinie wieder, die umrichterspezifisch wiederum mit der niedrigen Basisfrequenz f_{B} korreliert ist.

Ein entsprechendes Kennlinienfeld, dass die Temperaturabhängigkeit des Leistungsteils (Halbleiterschalter 8) des Wechselrichters 2 gemäß der Beziehung T = I² x t bei bestimmten Pulsfrequenzen fₙ und zeitabhängig wiedergibt, ist in der Regeleinrichtung 11, beispielsweise in der Regelfunktion des Stromreglers 12 oder parallel hierzu, hinterlegt.

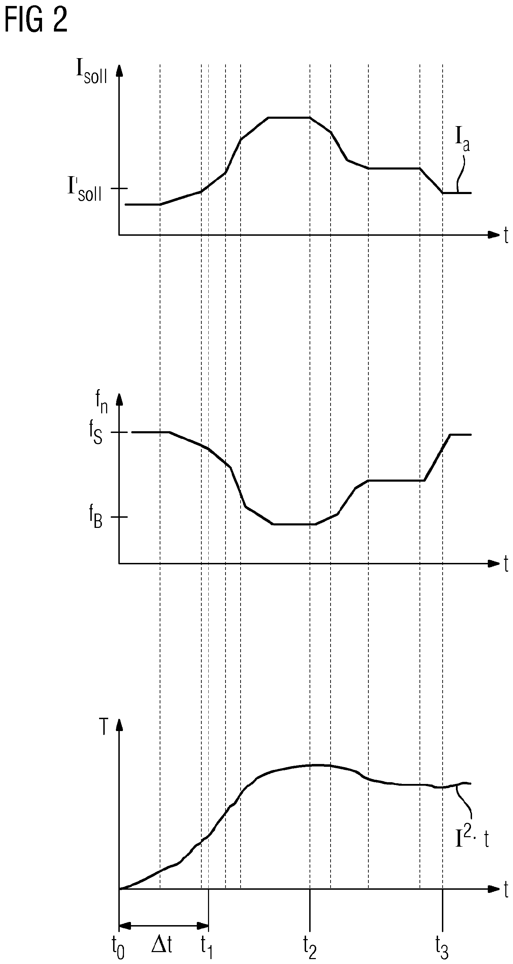

FIG 2 zeigt im oberen Diagramm einen Stromverlauf, im mittleren Diagramm einen Frequenzverlauf und im unteren Diagramm einen Temperaturverlauf über einen ausgewählten Zeitbereich t₀ bis t₃. Bestimmte Betriebsweisen in Fördertechnikanlagen, beispielsweise der Elektrohängebahn 10, sind repräsentiert durch entsprechende Leistungsanforderungen an den Elektromotor 9. Dies spiegelt sich in einem entsprechenden Verlauf des Sollwertes Iₛₒₗₗ des Ausgangsstroms Iₐ wieder. Das zugehörige Regelverhalten der Regeleinrichtung 11 hinsichtlich der Veränderung der Pulsfrequenz fₙ des Frequenzumrichters 1 ist im mittleren Diagramm ersichtlich. Das untere Diagramm zeigt das mit der sich ändernden Leistungsanforderung ändernde Wärmeverhalten infolge von Schaltverlusten der Halbleiterschalter 8 des Wechselrichters 2, wobei mit einem zunehmendem Ausgangsstrom Iₐ bzw. Sollwert Iₛₒₗₗ ein Anstieg der Temperatur T gemäß der genannten Beziehung einhergeht.

Zum Zeitpunkt t₀ ist die Pulsfrequenz fₙ auf den Sollwert fₛ eingestellt. Innerhalb eines Zeitintervalls Δt, in dem sich der Sollwert Iₛₒₗₗ des Ausgangsstroms Iₐ nur geringfügig erhöht, stellt die Regeleinrichtung 11 die Pulsfrequenz fₙ praktisch unverändert auf die Sollfrequenz Iₛₒₗₗ ein. Innerhalb dieses Zeitintervalls Δt verbleibt die Pulsfrequenz fₙ somit auf einem entsprechend hohen Frequenzniveau.

Zum Zeitpunkt t₁ steigt der Sollwert Iₛₒₗₗ des Ausgangsstroms Iₐ vergleichsweise steil an, beispielsweise infolge einer zu durchfahrenden Beschleunigungsrampe oder der Aufbringung eines Losbrechmomentes beim Transportieren einer Last oder dem Beginn einer Transportbewegung und damit einer geforderten Überlast. Diesem steilen Anstieg des Ausgangsstroms Iₐ bzw. dessen Sollwertes Iₛₒₗₗ folgt ein entsprechender Anstieg der Temperatur T des Leistungsteils (Halbleiterschalter 8) des Frequenzumrichters 1 mit dem Quadrat des Ausgangsstroms Iₐ.

Zum Zeitpunkt t₁ überschreitet der regelungstechnisch generierte Sollwert Iₛₒₗₗ den der Pulsfrequenz fₛ zugeordneten Grenzwert Iₘₐₓ des Ausgangsstroms Iₐ, beispielsweise um einen vorgegebenen Grenzwertbereich. Mittels der Schalteinrichtung 14 erfolgt eine Umschaltung der Pulsfrequenz fₙ auf einen niedrigeren Frequenzwert und demzufolge eine Reduzierung der Pulsfrequenz fₙ. Die Reduzierung der Pulsfrequenz fₙ wird stufenweise und hysteresebehaftet durchgeführt. Mit zunehmendem Sollwert Iₛₒₗₗ des Ausgangsstroms Iₐ wird die Pulsfrequenz fₙ zunehmend reduziert bis zum Erreichen beispielsweise der unteren Basisfrequenz f_{B}.

Zum Zeitpunkt t₂, zu dem beispielsweise die geforderte Beschleunigungsrampe beendet ist, reduziert die übergeordnete Prozesssteuerung 15 den Drehzahlsollwert Sₛₒₗₗ oder der eingestellt Sollwert wird erreicht mit der Folge, dass auch der Momentensollwert Mₛₒₗₗ abnimmt. Der Stromregler 12 generiert demzufolge einen entsprechend reduzierten Sollwert Iₛₒₗₗ. Unterschreitet dieser den Grenzstromwert Iₘₐₓ, so erhöht die Schalteinrichtung 14 daraufhin die Pulsfrequenz fₙ in diskreten Frequenzschritten von beispielsweise 2kHz und bevorzugt mit einer dieser Frequenzstufe von 2kHz entsprechenden Hysterese, die in FIG 1 im Zusammenhang mit der Schalteinrichtung 14 symbolisch veranschaulicht ist. Mit abnehmendem Strombedarf Iₛₒₗₗ des Ausgangsstroms Iₐ erreicht zum Zeitpunkt t₃ die stufenweise erhöhte Pulsfrequenz fₙ erneut die obere Sollfrequenz fₛ.

## Patentansprüche

1. Verfahren zur Steuerung eines Stromrichters (1) mit einem steuerbaren Wechselrichter (2), der lastseitig mit einem elektromotorischen Antrieb (9) einer Fördertechnikanlage (10), insbesondere einer Elektrohängebahn der Automobilindustrie, verbunden ist,
- wobei die Pulsfrequenz (fₙ) des Strom- bzw. Wechselrichters (1, 2) in Abhängigkeit vom lastseitig geforderten Ausgangsstrom (Iₐ) des Stromrichters (1) verändert wird,
- wobei die Pulsfrequenz (fₙ) reduziert wird, wenn ein leistungs- oder drehzahlabhängiger Sollwert (Iₛₒₗₗ) des Ausgangsstroms (Iₐ) einen pulsfrequenzabhängigen Stromgrenzwert (Iₘₐₓ) überschreitet,
- wobei die Pulsfrequenz (fₙ) erneut auf eine eingestellte Sollfrequenz (fₛ) erhöht wird, wenn der angeforderte Sollwert (Iₛₒₗₗ) des Ausgangsstroms (Iₐ) den Stromgrenzwert (I-ₘₐₓ) unterschreitet, und
- wobei eine Reduzierung der Pulsfrequenz (fₙ) ausgehen von der auf eine Basisfrequenz (f_{B}) bezogenen Sollfrequenz (fₛ) und die Erhöhung der Pulsfrequenz (fₙ) bis maximal auf die Sollfrequenz (fₛ) in diskreten Schritten f_{1...m} erfolgt.

2. Verfahren nach Anspruch 1, **dadurch ge- kennzeichnet,** dass der leistungs- bzw. drehzahlabhängig angeforderte Stromsollwert (Iₛₒₗₗ) des Ausgangsstroms (Iₐ) mit dem Stromgrenzwert (Iₘₐₓ) verglichen wird, der einer bestimmten Pulsfrequenz (fₙ) zugeordnet ist, wobei bei einer Abweichung des Stromsollwerts (Iₛₒₗₗ) vom Stromgrenzwert (Iₘₐₓ) die Pulsfrequenz (fₙ) reduziert wird, wenn der Stromsollwert (Iₛₒₗₗ) größer wird als der Stromgrenzwert (Iₘₐₓ), und wobei die Pulsfrequenz (fₙ) erhöht wird, wenn der Stromsollwert (Iₛₒₗₗ) erneut kleiner wird als der Stromgrenzwert (Iₘₐₓ).

3. Verfahren nach einem der Ansprüche 1 oder 2, **da- durch gekennzeichnet**, dass der Ausgangsstrom (Iₐ) des Stromrichters (1) als Istwert (Iᵢₛₜ) erfasst und mit dem Sollwert (Iₛₒₗₗ) verglichen wird, wobei der Sollwert (Iₛₒₗₗ) aus einer Abweichung (Δn) des aktuell geforderten Drehzahlsollwertes (nₛₒₗₗ) vom Drehzahlistwert (nᵢₛₜ) des elektromotorischen Antriebs (9) ermittelt wird.

4. Verfahren nach einem der Ansprüche 1 bis 3, **dadurch gekennzeichnet, dass** die Pulsfrequenz (fₙ) in Abhängigkeit vom aktuell vom Stromrichter (1) benötigten Ausgangsstrom (Iₐ) sowie von der aktuellen Temperatur (T) des Wechselrichters (2), insbesondere dessen gesteuert betriebenen Halbleiterschalter (8), verändert wird.

5. Verfahren nach Anspruch 4, **dadurch gekenn- zeichnet,** dass die Temperatur (T) der gesteuert betriebenen Halbleiterschalter (8) des Wechselrichters (2) gemäß der Beziehung I² x t aus dem aktuellen Ausgangsstrom (Iₐ) bzw. Iststrom (Iᵢₛₜ) ermittelt wird.

6. Verfahren nach einem der Ansprüche 1 bis 5, **dadurch gekennzeichnet , dass** die Pulsfrequenz (fₙ) hysteresebehaftet in diskreten Frequenzschritten (Δn) verändert wird.

7. Fördertechnikanlage (10), insbesondere Elektrohängebahn der Automobilindustrie , umfassend einen Stromrichter (1), mit einem von einer Regeleinrichtung (11) gesteuerten Wechselrichter (2), der eingangsseitig von einem Wechselstromnetz (6) gespeist und ausgangsseitig mit einem elektromotorischen Antrieb (9) der Fördertechnikanlage (10), insbesondere einer Elektrohängebahn der Automobilindustrie, verbunden ist,
- wobei die Regeleinrichtung (11) die Pulsfrequenz (fₙ) des Wechselrichters (2) in Abhängigkeit vom betriebsbedingt geforderten Ausgangsstrom (Iₐ) reduziert, wenn ein Sollwert (Iₛₒₗₗ) des Ausgangsstroms (Iₐ) einen pulsfrequenzabhängigen Stromgrenzwert (I_{fn}) überschreitet, und
- wobei die Regeleinrichtung (11) die Pulsfrequenz (fₙ) erneut auf eine, insbesondere voreingestellte, Sollfrequenz (Is) erhöht, wenn der angeforderte Sollwert (Iₛₒₗₗ) des Ausgangsstroms (Iₐ) den Stromgrenzwert (I_{fn}) unterschreitet,
- wobei die Umschaltung der Pulsfrequenz (fₙ) in diskreten Frequenzschritten (Δf) erfolgt, und
- wobei die Regeleinrichtung (11) die Umschaltung der Pulsfrequenz (fₙ) zumindest in Richtung auf die Sollfrequenz (fₛ) nach Art einer Zweipunktregelung steuert.

8. Fördertechnikanlage (10) nach Anspruch 7, **dadurch ge-kennzeichnet,**
- dass die Regeleinrichtung (11) eine Stromregelung (12) und eine dieser überlagerte Drehzahlregelung (13) umfasst, die aus einer Abweichung der aktuellen Antriebsdrehzahl (nᵢₛₜ) von einem betriebsbedingt geänderten Drehzahlsollwert (nₛₒₗₗ) einen Sollwert (Iₛₒₗₗ) des Ausgangsstroms (Iₐ) generiert und diesen mit dem pulsfrequenzabhängigen Stromgrenzwert (Iₘₐₓ) vergleicht,
- dass die Regeleinrichtung (11) auf eine gegenüber einer Sollfrequenz (fₛ) niedrige Pulsfrequenz (fₙ, f_{B}) umschaltet, wenn der generierte Sollwert (Iₛₒₗₗ) des Ausgangsstroms (Iₐ) den Stromgrenzwert (Iₘₐₓ) überschreitet, und
- dass die Regeleinrichtung (11) auf eine höhere Pulsfrequenz (fₙ,f_{S}), insbesondere auf die Sollfrequenz (f_{S}), zurückschaltet, wenn der Sollwert (Iₛₒₗₗ) des Ausgangsstroms (Iₐ) den Stromgrenzwert (Iₘₐₓ) erneut unterschreitet.

9. Fördertechnikanlage (10) nach Anspruch 7 oder 8, **dadu rch gekennzeichnet** , dass die Stromregelung (12) in Abhängigkeit von der aktuellen Temperatur (T) der gesteuert betriebenen Halbleiterschalter (8) des Wechselrichters (2) erfolgt.

## Claims

1. Method for controlling a current converter (1) with a controllable inverter (2), which is connected on the load side to an electric motor drive (9) of a conveying and handling plant (10), in particular an electric monorail system in the automotive industry,
- wherein the pulse frequency (fₙ) of the current converter or inverter (1, 2) is varied as a function of the output current (Iₐ) of the current converter (1) required on the load side,
- wherein the pulse frequency (fₙ) is reduced if a power- or rotational speed-dependent target value (I_{target}) of the output current (Iₐ) exceeds a pulse frequency-dependent current limit value (Iₘₐₓ),
- wherein the pulse frequency (fₙ) is raised to a set target frequency (fₛ) again if the requested target value (I_{target}) of the output current (Iₐ) falls below the current limit value (Iₘₐₓ), and
- wherein a reduction of the pulse frequency (fₙ) takes place starting from the target frequency (fₛ) based on a base frequency (f_{B}) and the raising of the pulse frequency (fₙ) takes place up to the target frequency (fₛ) as a maximum in discrete steps f_{1...m}.

2. Method according to claim 1, **characterised in that** the current target value (I_{target}) of the output current (Iₐ) requested as a function of the power or rotational speed is compared with the current limit value (Iₘₐₓ), which is assigned to a particular pulse frequency (fₙ), wherein, upon a deviation of the current target value (I_{target}) from the current limit value (Iₘₐₓ), the pulse frequency (fₙ) is reduced if the current target value (I_{target}) becomes greater than the current limit value (Iₘₐₓ), and wherein the pulse frequency (fₙ) is increased if the current target value (I_{target}) becomes smaller than the current limit value (Iₘₐₓ) once again.

3. Method according to one of claims 1 or 2, **characterised in that** the output current (Iₐ) of the current converter (1) is captured as an actual value (I_{actual}) and compared with the target value (I_{target}), wherein the target value (I_{target}) is determined from a deviation (Δn) of the currently required rotational speed target value (n_{target}) from the rotational speed actual value (n_{actual}) of the electric motor drive (9) .

4. Method according to one of claims 1 to 3, **characterised in that** the pulse frequency (fₙ) is varied as a function of the output current (Iₐ) currently required by the current converter (1) and also the current temperature (T) of the inverter (2), in particular the semiconductor switch (8) operated in a controlled matter thereof.

5. Method according to claim 4, **characterised in that** the temperature (T) of the semiconductor switch (8), operated in a controlled manner, of the inverter (2) is determined from the current output current (Iₐ) or actual current (I_{actual}) as per the relationship I² x t.

6. Method according to one of claims 1 to 5, **characterised in that** the pulse frequency (fₙ) is varied in discrete frequency steps (Δn) subject to a hysteresis.

7. Conveying and handling plant (10), in particular an electric monorail system in the automotive industry, comprising a current converter (1), with an inverter (2) controlled by a regulation facility (11), which is fed by an AC power supply (6) on the input side and is connected to an electric motor drive (9) of a conveying and handling plant (10), in particular an electric monorail system in the automotive industry, on the output side,
- wherein the regulation facility (11) reduces the pulse frequency (fₙ) of the inverter (2) as a function of the output current (Iₐ) required for operational reasons, if a target value (I_{target}) of the output current (Iₐ) falls below a pulse frequency-dependent current limit value (I_{fn}), and
- wherein the regulation facility (11) raises the pulse frequency (fₙ) to an, in particular preset, target frequency (I_{S}) again if the requested target value (I_{target}) of the output current (Iₐ) exceeds the current limit value (I_{fn}) ,
- wherein the pulse frequency (fₙ) is shifted in discrete frequency steps (Δf), and
- wherein the regulation facility (11) controls the shifting of the pulse frequency (fₙ) at least in the direction towards the target frequency (fₛ) in the manner of a two-point control.

8. Conveying and handling plant (10) according to claim 7, **characterised in that**
- the regulation facility (11) comprises a current regulator (12) and a rotational speed regulator (13) superimposed thereupon, which generates a target value (I_{target}) of the output current (Iₐ) from a deviation of the current drive rotational speed (n_{actual}) from a rotational speed target value (n_{target}) changed for operational reasons and compares said target value (I_{target}) with the pulse frequency-dependent current limit value (Iₘₐₓ),
- the regulation facility (11) is shifted to a lower pulse frequency (fₙ, f_{B}) compared to a target frequency (fₛ) if the generated target value (I_{target}) of the output current (Iₐ) exceeds the current limit value (Iₘₐₓ), and
- the regulation facility (11) switches back to a higher pulse frequency (fₙ, f_{S}), in particular to the target frequency (f_{S}), if the target value (I_{target}) of the output current (Iₐ) falls below the current limit value (Iₘₐₓ) once again.

9. Conveying and handling plant (10) according to claim 7 or 8, **characterised in that** the current regulation (12) takes place as a function of the current temperature (T) of the semiconductor switch (8), operated in a controlled manner, of the inverter (2).

## Revendications

1. Procédé de commande d'un convertisseur ( 1 ) ayant un onduleur ( 2 ), qui peut être commandé et qui est relié du côté de la charge à un entraînement ( 9 ) par moteur électrique d'une installation ( 10 ) de la technique de manutention, notamment d'un transporteur aérien électrique de l'industrie automobile,
- dans lequel on modifie la fréquence ( fₙ ) des impulsions du convertisseur ( 1 ) et respectivement de l'onduleur ( 2 ) en fonction du courant ( Iₐ ) de sortie, exigé du côté de la charge, du convertisseur ( 1 ),
- dans lequel on réduit la fréquence ( fₙ ) des impulsions, si une valeur ( Iₛₒₗₗ ) de consigne, qui dépend de la puissance ou de la vitesse de rotation, du courant ( Iₐ ) de sortie, dépasse une valeur ( Iₘₐₓ ) limite de courant, qui dépend de la fréquence des impulsions,
- dans lequel on augmente à nouveau la fréquence ( fₙ ) des impulsions à une valeur ( fₛ ) de consigne réglée, si la valeur ( Iₛₒₗₗ ) de consigne exigée du courant ( Iₐ ) de sortie est inférieure à la valeur ( Iₘₐₓ ) limite de courant, et
- dans lequel une réduction de la fréquence ( fₙ ) des impulsions, à partir de la fréquence ( fₛ ) de consigne rapportée à une fréquence ( f_{B} ) de base et l'augmentation de la fréquence ( fₙ ) des impulsions, jusqu'au maximum à la fréquence ( fₛ ) de consigne s'effectue en des pas f_{1...m} discrets.

2. Procédé suivant la revendication 1, **caractérisé en ce que** l'on compare la valeur ( Iₛₒₗₗ ) de consigne du courant exigée en fonction de la puissance ou de la vitesse de rotation du courant ( Iₐ ) de sortie à la valeur ( Iₘₐₓ ) limite de courant, qui est affectée à une fréquence ( fₙ ) déterminée des impulsions, dans lequel, s'il y a un écart de la valeur ( Iₛₒₗₗ ) de consigne de courant à la valeur ( Iₘₐₓ ) limite de courant, on réduit la fréquence ( fₙ ) des impulsions, si la valeur ( Iₛₒₗₗ ) de consigne du courant est plus grande que la valeur ( Iₘₐₓ ) limite de courant, et dans lequel on augmente la fréquence ( fₙ) des impulsions, si la valeur ( Iₛₒₗₗ ) de consigne de courant est à nouveau plus petite que la valeur ( Iₘₐₓ ) limite de courant.

3. Procédé suivant l'une des revendications 1 ou 2, **caractérisé en ce que** l'on détecte comme valeur ( Iᵢₛₜ ) réelle, le courant ( Iₐ ) de sortie du convertisseur ( 1 ) et on le compare à la valeur ( Iₛₒₗₗ ) de consigne, dans lequel on détermine la valeur ( Iₛₒₗₗ ) de consigne à partir d'un écart ( Δn ) de la valeur ( nₛₒₗₗ ) de consigne de vitesse de rotation exigée présentement à la valeur ( nᵢₛₜ ) de vitesse de rotation de l'entraînement ( 9 ) par moteur électrique.

4. Procédé suivant l'une des revendications 1 à 3, **caractérisé en ce que** l'on modifie la fréquence ( fₙ ) des impulsions en fonction du courant ( Iₐ ) de sortie nécessité présentement par le convertisseur ( 1 ), ainsi que de la température ( T ) présente de l'onduleur ( 2 ), notamment de son interrupteur ( 8 ) à semiconducteur à fonctionnement commandé.

5. Procédé suivant la revendication 4, **caractérisé en ce que** l'on détermine la température ( T ) de l'interrupteur ( 8 ) à semiconducteur, fonctionnant de manière commandée, de l'onduleur ( 2 ) suivant la relation I² x t à partir du courant ( Iₐ ) de sortie présent ou du courant ( Iᵢₛₜ ) réel.

6. Procédé suivant l'une des revendications 1 à 5, **caractérisé en ce que** l'on modifie la fréquence ( fₙ ) des impulsions entachée d'hystérésis en des pas ( Δn ) de fréquence discrets.

7. Installation (10) de la technique de manutention, notamment transporteur aérien électrique de l'industrie automobile, comprenant un convertisseur ( 1 ), ayant un onduleur ( 2 ), qui est commandé par un dispositif ( 11 ) de régulation, qui est alimenté du côté de l'entrée par un réseau ( 6 ) d'onduleur et qui est relié du côté de la sortie à un entraînement ( 9 ) par moteur électrique, de l'installation ( 10 ) de la technique de manutention, notamment d'un transporteur aérien électrique de l'industrie automobile,
- dans lequel le dispositif ( 11 ) de régulation réduit la fréquence ( fₙ ) des impulsions de l'onduleur ( 2 ) en fonction du courant ( Iₐ ) de sortie exigé par le fonctionnement, si une valeur ( Iₛₒₗₗ ) de consigne du courant ( Iₐ ) de sortie dépasse une valeur ( I_{fn} ) limite de courant qui dépend de la fréquence des impulsions, et
- dans lequel le dispositif ( 1 ) de régulation augmente à nouveau la fréquence ( fₙ ) des impulsions à une fréquence ( Iₛ ) de consigne, notamment réglée à l'avance, si la valeur ( Iₛₒₗₗ ) de consigne exigée du courant ( Iₐ ) de sortie est inférieure à la valeur ( I_{fn} ) limite de courant.
- dans lequel la commutation de la fréquence ( fₙ ) des impulsions s'effectue en des pas ( Δf ) de fréquence discrets, et
- dans lequel le dispositif ( 11 ) de régulation commande à la manière d'une régulation à deux points la commutation de la fréquence ( fₙ ) des impulsions au moins dans le sens allant vers la fréquence ( fₛ ) de consigne.

8. Installation ( 10 ) de la technique de manutention suivant la revendication 7, **caractérisé**
- **en ce que** le dispositif ( 11 ) de régulation comprend une régulation ( 12 ) de courant et une régulation ( 13 ) de vitesse de rotation qui lui est superposée et qui produit, à partir d'un écart, de la vitesse ( nᵢₛₜ ) de rotation d'entraînement présente à une valeur ( nₛₒₗₗ ) de consigne de vitesse de rotation modifiée en raison du fonctionnement, une valeur ( Iₛₒₗₗ ) de consigne du courant ( Iₐ ) de sortie et compare celle-ci à la valeur ( Iₘₐₓ ) limite de courant, qui dépend de la fréquence des impulsions,
- **en ce que** le dispositif ( 11 ) de régulation commute sur une fréquence ( fₙ, f_{B} ) des impulsions plus basse qu'une fréquence ( fₛ ) de consigne, si la valeur ( Iₛₒₗₗ ) de consigne produite du courant ( Iₐ ) de sortie dépasse la valeur ( Iₘₐₓ ) limite de courant, et
- **en ce que** le dispositif de régulation revient à une fréquence ( fₙ, fₛ ) des impulsions plus haute, notamment à la fréquence ( fₛ ) de consigne, si la valeur ( Iₛₒₗₗ ) de consigne du courant ( Iₐ ) de sortie repasse en dessous de la valeur ( Iₘₐₓ ) limite de courant.

9. Installation ( 10 ) de la technique de manutention suivant la revendication 7 ou 8, **caractérisé en ce que** la régulation ( 12 ) de courant s'effectue en fonction de la température ( T ) présente de l'interrupteur ( 8 ) à semiconducteur, en fonctionnement commandé, de l'onduleur ( 2 ).
